**Europäisches Patentamt**

**European Patent Office**

**Office européen des brevets**

(19)

(11) Publication number: **0 201 298**
**A2**

(12) # EUROPEAN PATENT APPLICATION

(21) Application number: **86303366.8**

(22) Date of filing: **02.05.86**

(51) Int. Cl.⁴: **B 23 Q 3/12,** B 23 B 31/12,
B 23 B 31/16, B 23 B 31/18,
B 23 B 31/32, B 23 B 31/40

(30) Priority: **03.05.85 US 730755**
**15.04.86 US 850556**

(43) Date of publication of application: **12.11.86**
**Bulletin 86/46**

(84) Designated Contracting States: **DE GB IT SE**

(71) Applicant: **Sheffer Collet Company, 1032 Woodmere P.O.**
**Box 547, Traverse City Michigan 49684 (US)**

(72) Inventor: **Waite, Carlson A., 6595 Secore Road, Traverse**
**City Michigan 49684 (US)**
Inventor: **Stone, William Shelton, Route 2, Box 173A,**
**East Jordan Michigan 49727 (US)**
Inventor: **Dittrich, Thomas Michael, Route 1, Box 22,**
**Lake Leelaneau Michigan 49653 (US)**

(74) Representative: **Robinson, Anthony John Metcalf et al,**
**Kilburn & Strode 30 John Street, London, WC1N 2DD**
**(GB)**

(54) **Automatic aligning interchangeable work support.**

(57) Means for mounting a workpiece holder such as a collet on a support element such as the arbor of a machine tool in preparation for machining comprises a support member (10; 100) for attachment to the arbor and a plate member (60; 150) carrying the collet, the support member and the plate member having respectively a frustoconical boss (55; 152) and a complementary recess (88; 102). The support member has latch elements (38; 104) which move in and out under the control of a locking ring (44; 130) and engage groove means on the plate member. The workpiece mounting can thus be changed rapidly and reliably with most of the set-up being carried out away from the machine tool.

FIG. 5

ACTORUM AG

AUTOMATIC ALIGNING INTERCHANGEABLE WORK SUPPORT

This invention relates to machine tools and more particularly to a means of quickly reconstituting the work support at a machining station to adapt it from a workpiece of one design to a workpiece of another design, at the same time being able to maintain tolerances within very precise limits.

Many systems and tools have been developed for supporting workpieces while they are being machined. These systems and tools have the commmon objective of holding the workpiece with sufficient accuracy that the machining satisfies the tolerance requirements for the particular part. The closer the tolerances, the greater the necessity for accurate positioning of the workpiece and the greater the necessity that the workpiece be held against deflection resulting from tool pressure. One approach to this problem has been the use of a jig on which the part is mounted. A jig support is provided at the tool to hold and locate the jig with respect to the tool. In many cases the jig with the workpiece secured to it is moved from machine to machine so that various machining operations can be performed on the workpiece. In many cases the jigs are expensive and their usefulness is limited to a part of a single design and size. Once the production run of the workpiece is finished, the jig has no further utility and is scrap. An example of this type of jig is disclosed in US-A-2 176 089. The cost of this type of tooling coupled with its one-part utility limits the use of this type of tooling to parts requiring mass production.

An even more costly and specialized approach to the problem of holding workpieces for machining is disclosed in US-A-2 392 169 and US-A-4 309 600. These involve the design of entire systems for multiple machining of parts. To change over systems of this type from one part design to another necessitates a long and costly rebuilding procedure. Thus, the system is useful only for mass produced products having long production runs whereby the cost of the system can be amortized.

Even with the investment in the foregoing systems, the problem of tolerance control remains. The systems are basically incapable of dependably controlling tolerances to less than 0.125 mm (0.005 inches).

For the purpose of machining parts when only small quantities are needed, various types of workpiece holders have been developed. An example of this type of workpiece holder is disclosed in US-A-4 184 669. While this type of workpiece holder can be adapted to mount parts of various designs, accurately positioning each workpiece is time consuming and requires both skill and experience. Thus, it is expensive to use. Further, it does not solve the problem of tolerance control.

In many cases, a chuck or collet could be used as the workpiece support. This would significantly improve tolerance control. However, chucks and collets have a very limited range of adjustment for workpieces of different sizes, normally only a few tenths of an inch or a few millimetres. Thus, the change over from one part to another involves replacing the chuck or collet to adapt the machine from one workpiece to another. This is a time consuming operation. Further, each time such a change is made the replacement chuck or collet has to be checked for accuracy of mounting including concentricity with the tool itself. Normally, it also has to be checked for axial position. This is true whether the chuck is mounted for stationary or driven use. The result again is a time consuming and expensive operation. It is also an important cost factor that while the chucks or collets are being exchanged and the replacement checked for accuracy, the machine on which mounting is done is out of production. These machines involve a very substantial capital investment. Therefore, their downtime is costly. This materially adds to the cost of the operation and has a material negative effect upon productivity.

According to the present invention, means for mounting an article holding assembly on a support element in preparation for machining comprises: a support member adapted to be mounted on said support element, said support member having parallel front and back faces normal to its central axis; a plate member having a back face normal to its central axis, the front face of said plate member being adapted to mount the article holding assembly; one of said support and plate members having a frusto-conical boss concentric

**0201298**

with its central axis and the other of said support and plate members having a recess concentric with its central axis and of a size and shape to snugly receive said boss therein for automatically rendering said plate and support members concentric with each other when the rear face of said plate member is seated against the front face of said support member; a plurality of latch elements mounted on said support member for inward and outward radial movement; the plate member having latch element engaging means aligned with the latch elements; a locking ring mounted on and surrounding the support member and operatively connected to the latch elements for shifting the latch elements radially in response to movement of the locking ring relative to the support member for connecting and disconnecting the plate member to and from the support member.

The invention provides a means to provide quick adaptation or changeover of a machining station or system from one machining requirement to another. Further, the invention not only does not sacrifice accuracy to accomplish its purpose, it can improve it. This invention is equally effective whether the change involves the size or the type of chuck required. This invention provides a means of rapid interchange with precise control of accuracy not heretofore attained. In this respect it provides greater accuracy control, more positive mounting and the ability to operate at much higher speeds than the arrangement described in US-A-4 550 922. The costly machine downtime and labour heretofore necessary for exchanging chucks or collets is eliminated.

The invention provides a plate member to which a chuck or collet or other workpiece holder is secured either permanently or detachably. The plate is provided with means whereby it can be quickly mounted on or removed from a supporting chuck or a support member having means for automatic centring and axial positioning. The plate and its support chuck are so constructed that the plate will automatically be accurately centred and axially positioned with respect to the support chuck. Thus, by the act of gripping the plate the support chuck automatically positions the plate and the workpiece without the necessity for any adjustments or accuracy checks. All of the accuracy checks and adjustments will have been taken care of at a separate service station or module where the workpiece holding means or clamping chuck was initially mounted on the plate. The downtime for the tool itself will be only that necessary to mount the plate on the support chuck. Further, it is possible to construct the mounting means so that the change from one chuck to another can be accomplished manually or entirely by a robot.

The invention may be carried into practice in various ways but several mounting means embodying the invention will now be described by way of example with reference to the accompanying drawings, in which:

Figure 1 is a front view of the support chuck for this invention;

Figure 2 is a sectional view taken along the plane II-II of Figure 1;

Figure 3 is a side elevation view of the locking ring;

Figure 4 is a view taken along the plane IV-IV of Figure 7;

Figure 5 is an exploded sectional view taken along the same plane as Figure 2 illustrating one adapter plate in position for mounting;

Figure 6 is a sectional view taken along the same plane as Figures 2 and 5 illustrating the support chuck with another adapter plate assembled thereon;

Figure 7 is a sectional view taken along the same plane as Figure 6 illustrating the adapter plate shown in Figure 6 separated from its supporting chuck;

Figure 8 is a sectional view taken along the same plane as Figure 5 illustrating a modification of the mounting for the jaws;

Figure 9 is a sectional view taken along the same plane as Figures 2 and 5 illustrating the adapter plate equipped with an O.D. (outside diameter) grip diaphragm chuck;

Figure 10 is a sectional view taken along the same plane as Figures 2 and 5 illustrating the adapter plate equipped with an I.D. (inside diameter) grip diaphragm chuck;

Figure 11 is a sectional view taken along the same plane as Figure 2 illustrating a support chuck suitable for operating the adapter plate and chuck illustrated in Figure 10;

Figure 12 is a front view of a further support member or support chuck;

Figure 13 is a sectional view taken along the plane XIII-XIII of Figure 12 showing both the support member or chuck and plate member with the members illustrated as separated;

Figure 14 is an enlarged fragmentary sectional view of one of the locks or latches for the work holder chuck shown in extended position;

Figure 15 is a view similar to Figure 14 illustrating the lock or latch in retracted position;

Figure 16 is a fragmentary sectional view taken along the plane XVI-XVI of Figure 14;

Figure 17 is a fragmentary sectional view taken along the plane XVII-XVII of Figure 15;

Figure 18 is a fragmentary elevation view taken along the plane XVIII-XVIII of Figure 14;

Figure 19 is a reduced fragmentary side view of the central boss of the plate;

Figure 20 is a reduced central section view of a modified actuator system for the work holding chuck; and

Figure 21 is a fragmentary sectional view similar to Figure 16 illustrating a modified construction for the actuator channel of the locking ring.

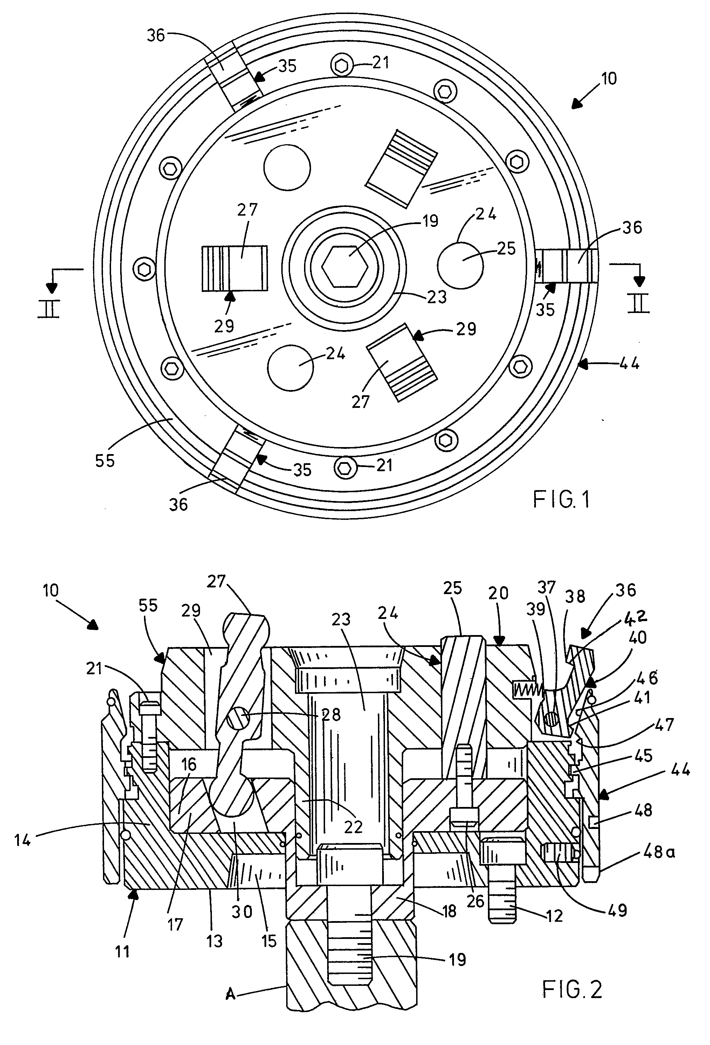

Reference will first be made to the construction shown in Figures 1 to 7. The construction includes a support chuck or member 10 having a base 11 adapted to be secured to a support element such as a lathe arbor or the like by screws 12 (Figure 2). The base has a rear face plate 13 and an annular forwardly extending peripheral flange 14. The rear face of the base plate 11 is recessed at 15 to seat a locating boss on its support structure or element which serves to positively locate it concentrically of its support. The support chuck or member may be mounted on a spindle for rotation or on a suitable stationary support element whereby it remains stationary while the tool to perform the machining is moved. The structure so far described and the means of mounting the support chuck are conventional.

Mounted within the support chuck's central chamber 16 is a piston 17 having a tubular boss 18 extending rearwardly through a central opening in the rear face plate 13. The boss provides means for securing the piston to an actuator rod A by means of a bolt 19.

The forward end of the central chamber 16 is closed by a cap 20 having a peripheral flange which is secured to the flange 14 by screws 21. The cap 20 has a rearwardly extending cylindrical sleeve 22 slidably seated within the central opening of the tubular boss 18. The sleeve provides a guide and stabilizer for the piston 17. The cap 20 has a central opening 23 communicating with the cylindrical sleeve providing access to the bolt 19 (Figures 1 and 2). The base 11 and cap 20 are both components of the support member.

The cap 20 also has three equally spaced openings 24 to slidably receive forwardly extending actuator posts 25 mounted to the forward face of the piston 17 by bolts 26. The forward ends of the posts project beyond the forward face of the cap. The cap also mounts three equally spaced actuator levers 27 which are supported by pins 28 on the cap for pivotal motion in radial directions. The levers extend forwardly through the cap through elongated radial slots 29. The rearward ends of the levers are rounded to seat in outwardly and forwardly inclined slots 30 in the piston. The forward ends of the levers are also rounded and project beyond the front face of the cap.

The forward edge of the peripheral flange of the cap 20 is provided with three notches 35. A clamp 36 is pivotally mounted in each notch by a pivot pin 37. The clamps 36 each have a hook 38 at its forward end and each is biased radially outwardly by a spring 39. The outer face of the clamp has a recess formed by a forwardly and outwardly inclined surface 40, terminating at the rearward end of the clamp at an outwardly extending projection 41. The hooks have rearwardly facing hooking surfaces 42.

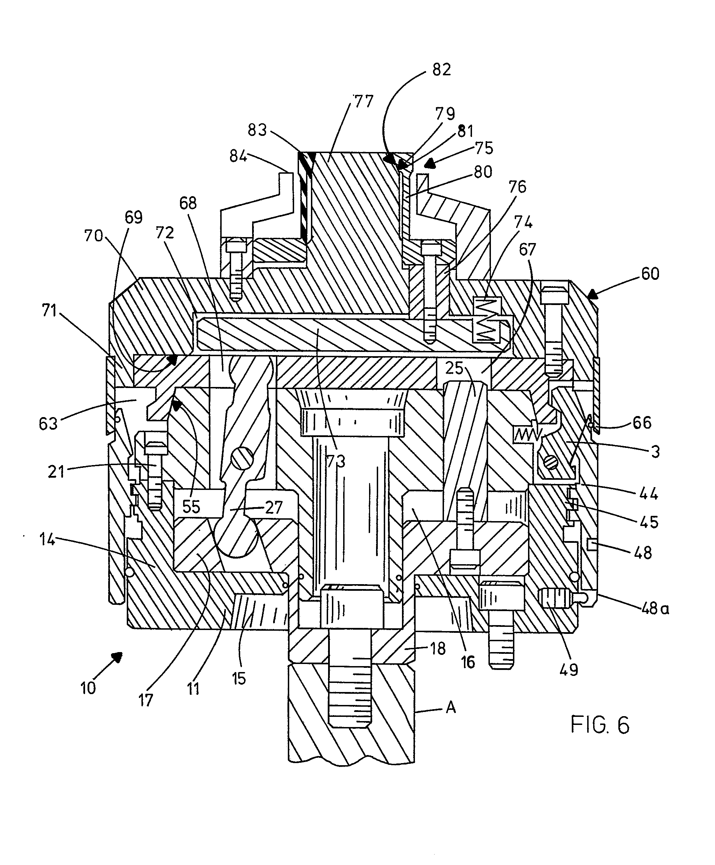

The clamps are closed by means of a locking ring 44 which surrounds and is secured to the base 11 by threads 45. The forward end of the ring is formed to provide an inner surface 46 shaped to be complementary to the outer surface 40 of the clamps. At the rearward end of the surface 46 the ring has an outwardly and rearwardly inclined camming surface 47 which engages and cooperates with the projection 41. The locking ring is extended and retracted by rotation and for this

0201298

purpose a pair of tool engaging apertures 48 and 48a are provided. The tool provides the operator with leverage to rotate the ring. This also can be done by a robot in which case different and additional means of gripping the ring can be provided. When the locking ring is rotatated by maximum forward position it is secured in place by suitable means such as by engagement of a detent 49 in a notch 48a (see Figure 6). This holds it against unintended retraction.

The outer surface of the cap 20 is chamfered at 55. The angle of this chamfer and its inclination are precisely controlled because this surface controls the concentricity of the hereinafter described adapter plate or plate member with respect to the support chuck.

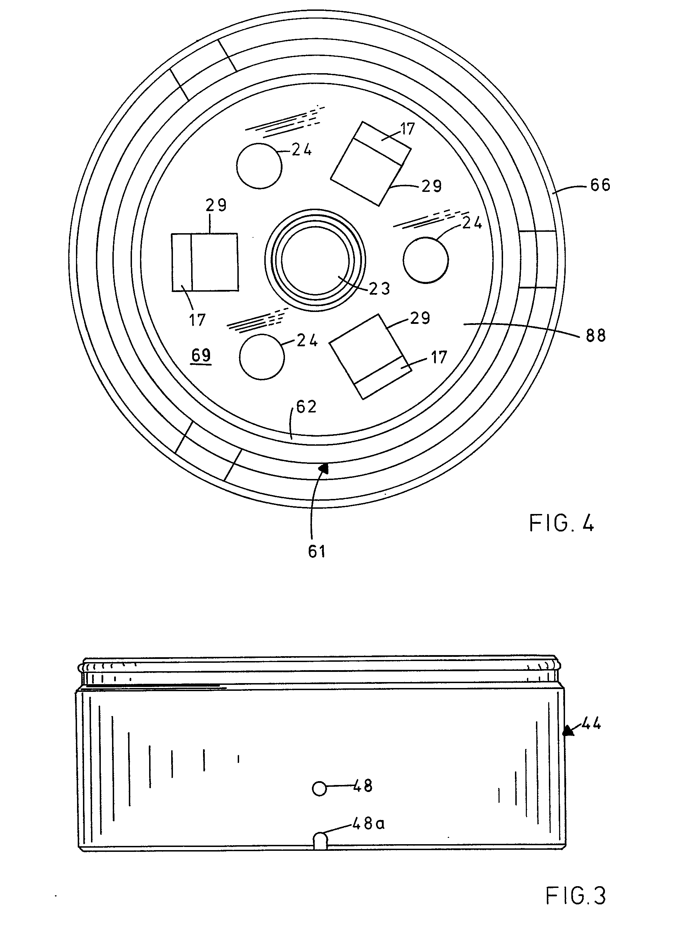

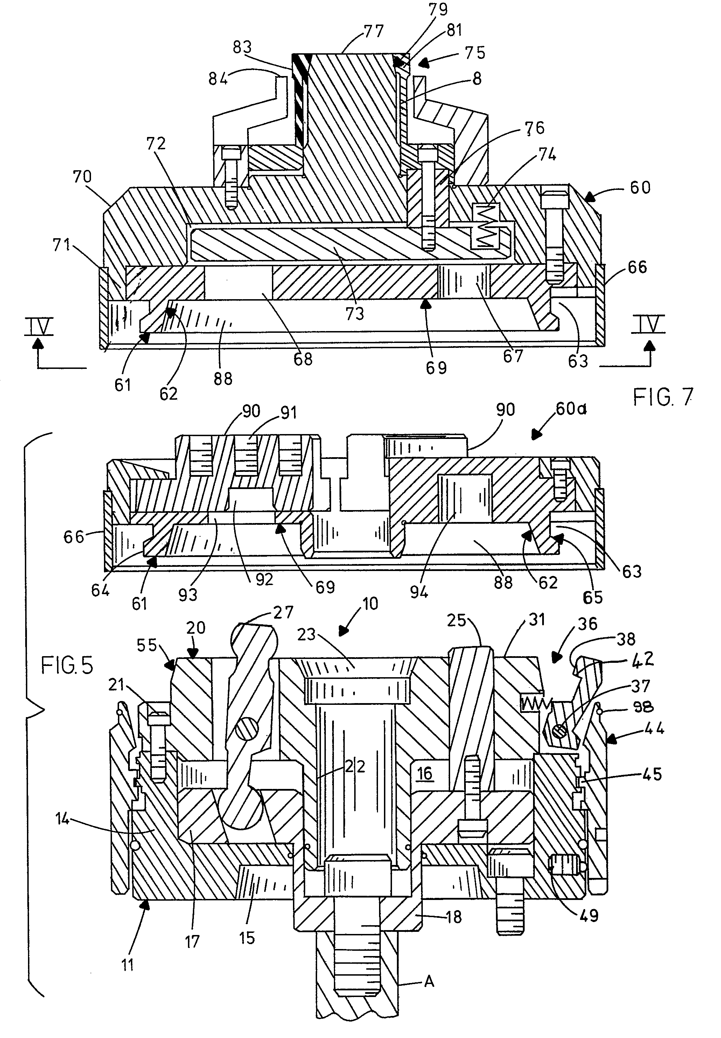

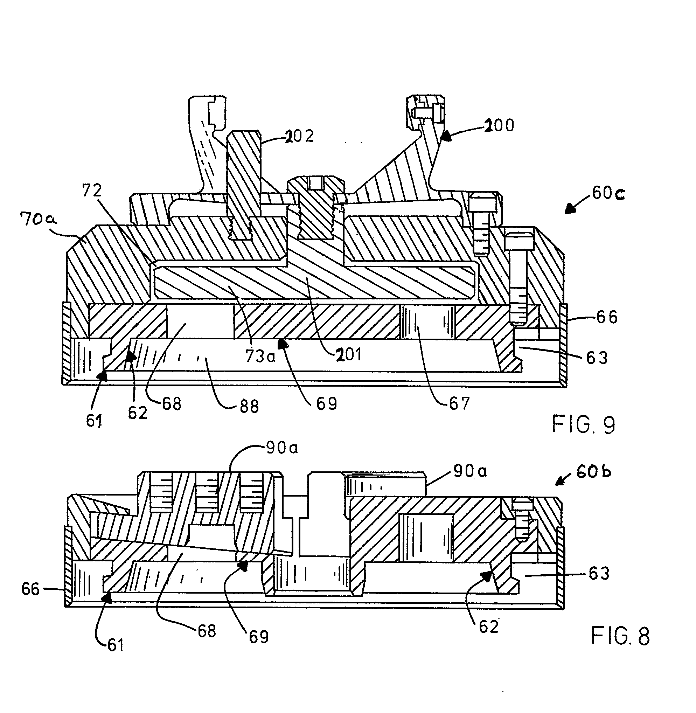

The adapter plate 60a or 60 may have more than one construction, and it will be noted that two possible constructions are shown in Figure 5 and in Figures 6 and 7 respectively. Irrespective of the adapter plate's construction, it has certain common features. One of these is the locator or anchor ring 61 (Figures 5 and 6). The inner surface 62 of the anchor ring is inclined outwardly and rearwardly to provide a recess 88 which is complementary to the boss formed by the chamfer 55 on cap 20. Thus, when the adapter plate is seated against the outer face of the cap 20, these complementary surfaces positively locate the adapter plate concentrically with the support chuck 10. The outer face of the anchor ring 61 has an annular recess 63 formed by the outwardly extending rib or finger 64. The forward face 65 of the finger is outwardly and rearwardly inclined and is complementary to the inclined rearwardly facing surface 42 of the clamps 36 (Figure 5). Thus, as the clamps are closed, they pull the adapter plate 60, 60a rearwardly to seat on the forward face of the cap 20 and to positively engage the chamfered surface 55.

Both the adapter plates 60 and 60a have a rearwardly extending periphral skirt 66. The purpose of this skirt will be explained subsequently.

The adapter plate 60, as illustrated in Figure 6, has holes 67 to permit the posts 25 to pass through it. It also has radially extending slots 68 to receive the forward ends of the levers 27. Seated over the adapter plate 60 is a cover 70 having a rearwardly extending peripheral rim 71 which seats over the edge of the plate 60.

The cover has a rearwardly facing central recess 72 in which is located an actuator plate 73. The actuator plate is biased rearwardly by a plurality of springs 74 arranged at equally spaced intervals around the plate. The actuator plate 73 is connected to a collet 75 by a plurality of equally spaced posts 76 which extend through the cover 70. The collet surrounds a central boss 77 projecting forwardly from the main part of the cover 70. The forward end of the central boss is chamfered at 79 and seats the inwardly inclined surfaces of the fingers of the collet. The collet is of conventional construction consisting of a plurality of fingers 80 arranged in a circle. The fingers 80 have radially enlarged heads 81, the outer

0201298

faces of which contact the workpiece and the inner faces 82 of which are shaped to be complementary to and seat against the chamfer of the central boss in the manner illustrated in Figure 6. To prevent the entrance of chips, the spaces between the fingers 80 may be filled with an elastic material 83. Surrounding the collet is a part stop or seat 84.

When the actuator rod A, to which the piston 17 is attached, is moved forwardly, the posts 25 are moved through the adapter plate to contact the actuator plate 73, forcing it forwardly against the springs 74. This in turn moves the ends of the collet fingers 78 beyond the end of the central boss 77, permitting them to converge due to their built-in spring bias to do so. This permits a workpiece to be seated on the stops 84 and by extending the central boss the fingers of the collet are expanded to grip the part.

In the adapter plate construction illustrated in Figure 6 the thickness of the plate is such that the forward ends of the levers 27 do not contact the actuator plate 73 because in this construction the levers perform no function. This is necessary since the levers are not used when an I.D. collet is employed as the workpiece grip.

Figure 5 shows a construction for grippping the workpiece on an O.D. This construction includes an adapter plate 60a incorporating exactly the same structure as shown in Figures 6 and 7 for attaching it to support chuck 10. However, in this case the adapter mounts three radially movable jaw supports 90, one aligned with each of the levers 27. Each of the jaw supports is bored and threaded at 91 to mount the actual part engaging jaw. The jaw supports are recessed into the face of the adapter plate in a manner conventional in chuck construction. The bottom face of each jaw is recessed at 92 to form a pocket which receives the end of one of the levers 27. The adapter plate 60a has radial slots 93 to permit free movement of the levers. As the piston 17 is moved forwardly the levers 27 are rocked to open the jaws and when the piston is retracted the levers are moved to close the jaws, gripping the part. Recesses 94 are provided to receive the posts 25, since in this construction, they are not functional except as stabilizing guides for the piston 17.

Figure 8 illustrates an adapter plate 60b which is a modification of the adapter plate illustrated in Figure 5. In this construction the guideways for the jaw supports 90a are inclined inwardly and rearwardly at small angle such as 3-5 degrees. Thus, as the jaws are closed they apply a small rearward force to the workpiece drawing it back against any work stop which has been provided. This eliminates any forward movement which might have been imparted to the workpiece as a result of tolerance accumulation or wear in the jaw supports 90a and their guideways.

Figure 9 illustrates an adapter plate 60c equipped with an O.D. grip or diaphragm chuck 200. The construction of the plate 60c is substantially identical to the plate 60, having a cover 70a with a central recess 72 within which is an actuator plate 73a. The actuator plate has a central post 201 extending through the cover 70a and attached to the centre of the diaphragm chuck 200. Stops 202 are provided to seat the workpiece. Uisng the actuator posts 25 of a support chuck 10 such as illustrated in Figure 2, the actuator plate 201 is pushed forwardly to open the jaws of the diaphragm chuck 200.

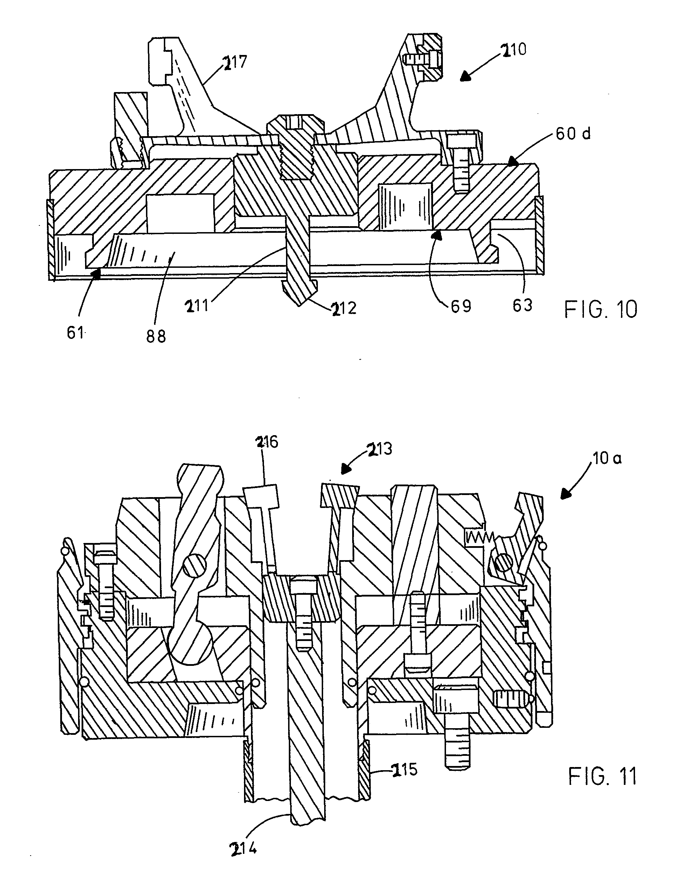

Figure 10 illustrates an adapted plate 60d equipped with an I.D. diaphragm chuck 210 having jaws 217. In this construction the cover is eliminated and the chuck 210 is mounted on the forward face of the plate 60d. The adapter plate 60d has a central opening through which extends an actuator pin 211. The pin 211 is secured to the centre of the chuck 210. The pin 211 has an enlarged rear head 212 by which it can be gripped by the collet type clamp 213 of the support chuck 10a which is shown in Figure 11. The clamp 213 is moved axially by means of an actuator rod 214 which is telescoped through an actuator tube 215 of the support chuck. When the clamp 213 is in its forward position as illustated in Figure 11 its jaws 216 open due to resilience. As the clamp is pulled rearwardly the jaws are forced to close about the head 212 of the pin due to the conical shape of the opening in the support chuck into which the clamp is drawn. The pull exerted on the pin deflects the diaphragm sufficiently to cause the jaws 217 to retract. Except for the rod 214 and the clamp 213, the use of the adapter plate 60d and the diaphragm chuck 210 requires no modification of the support chuck used for the other constructions of workpiece gripping means. The use of the tube 215 could be substituted for the rod A illustrated in Figures 2, 5 and 6 in all cases. It will be noted that using this construction the same support chuck can be used with any of the various types of workpiece gripping chucks, thus, giving it a universal function.

In the case of all of the adapter plates 60, 60a, 60b, 60c and 60d, the construction of the anchor ring 61 remains identical. Also, the rear surface 69 of the adapter plate within the anchor ring is flat and recessed within the anchor ring. Also, the size, shape and depth of the recess 88 within the anchor ring remains identical. It will be observed from Figures 2, 5, 6 and 11 that the front surface 31 of the support chuck is also flat. Thus, while the inner surface 62 of the anchor ring and the chamfer 55 on the support chuck control concentricity of the adapter plate, the surface to surface contact between the surfaces 31 and 69 controls the axial position of the adapter plate. Because these surfaces are critical to accuracy, these surfaces are finished by grinding on hardened masters to very close tolerances. In fact, the permissible tolerances are such that cutting reliefs in these surfaces is advisable to lessen the problem of molecular adhesion.

Figures 5, 6, 8, 9 and 10 are only illustrative of the types of work holding devices which can be mounted on an adapter plate. Further, instead of mechanically operating the chuck mounted on the adapter plate, air operation could be substituted.

The skirt 66 serves as a sealing device by seating over the forward end of the locking ring 44 when the adapter plate and support chuck are mounted for operation. By overlapping and seating against the forward end of the ring, the skirt holds the ring against any movement due to centrifugal forces. It also cooperates with an O-ring 98 to seal the interior of the support chuck/adapter plate assembly against the entrance of chips and particles which might cause misalignment bweteen the adapter plate and the support chuck.

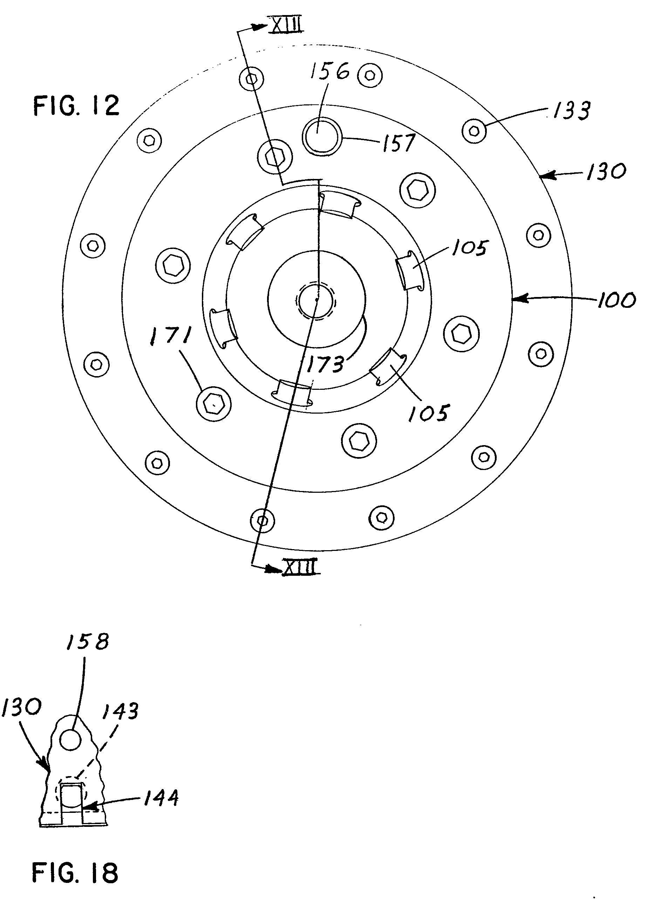

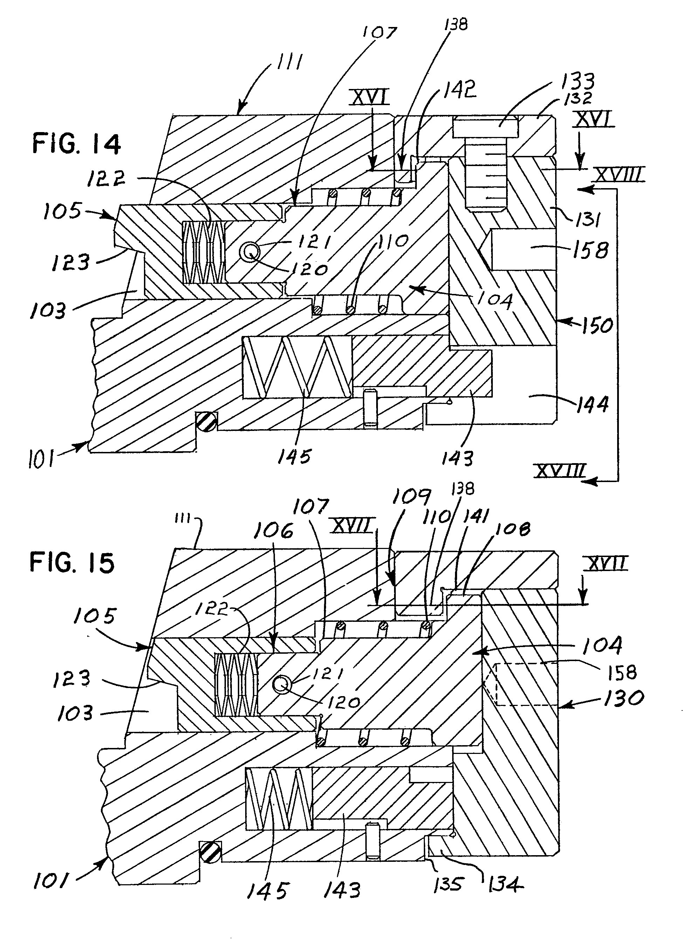

A further construction is shown in Figures 12 to 19 and includes a support member 100 designed to be mounted on a suitable support element, as, for example, a conventional machine tool spindle. The support member 100 is relatively thin axially and performs the functions of a chuck and, thus, throughout the following description is referred to as a support chuck. The support chuck has a body 101 having a frusto-conical recess 102 in its front face 111 located concentrically of the central axis of the chuck and spindle. The front face 111 is normal to the central axis of the support chuck. The body has a purality of radially extending openings 103 communicating with the recess 102 through its side wall. The openings 103 are equally spaced and extend through the body 101 and open through a recess in its radially outer face. Slidably mounted in each of the openings 103 is a latch assembly 104 (Figures 14 and 15) the inner end of which has a latch finger 105. The outer end of the latch finger 105 has a blind central opening 106 which receives the inner end of a plunger portion 107 of the latch assembly 104. The plunger has a head 108 on its outer end. The radially outer portion of each of the openings 103 has a counterbore to receive a spring 110 which urges the plunger outwardly.

The latch finger 105 and the plunger 107 are connected by a pin 120 which passes through an enlarged opening 121 in the plunger, permitting a limited amount of lost motion between the finger and plunger. Within the blind opening 106 a column of Bellville or conical washers 122 normally urge the latch finger and plunger apart to the limit permitted by the pin 120 seated in the opening 121 (Figures 14 and 15). The inner end of the latch finger has a rearwardly facing cam surface 123.

Surrounding the support chuck body and seated in the circumferential recess is a locking ring 130. The locking ring 130 has an annular primary cam member 131 and an annular secondary cam member 132 connected by cap screws 133. The rear face of the primary cam member 131 has a retainer flange 134 which seats in a channel 135 formed in the rear outer corner of the body 101 (Figure 15).

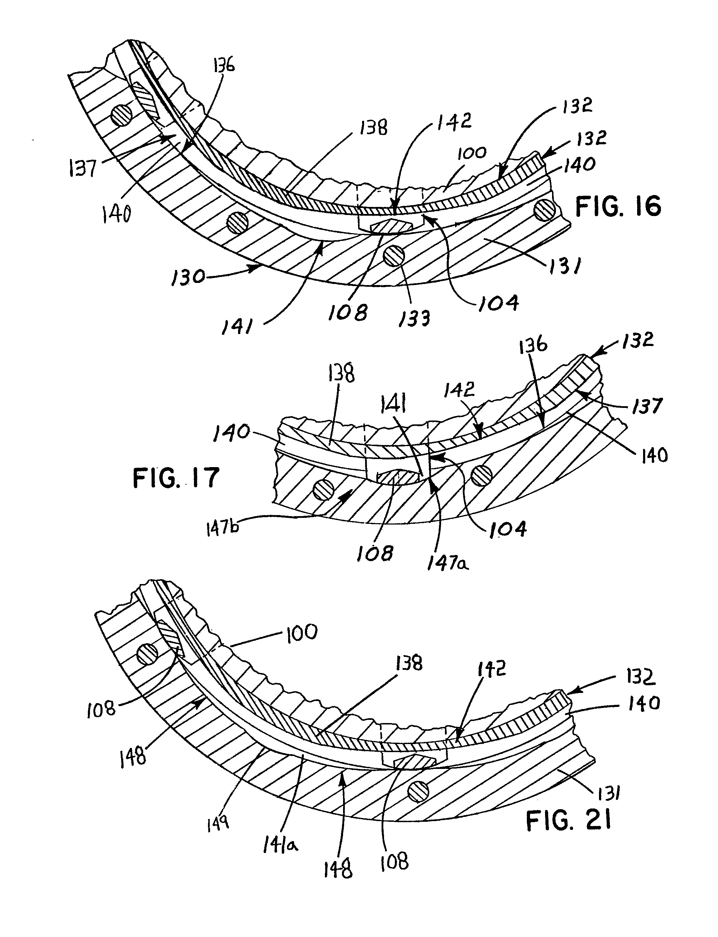

The inner face 136 of the primary cam member 131 cooperates with the outer face 137 of inner lip 138 of the secondary cam member 132 to create an actuator channel or cam track 140 between them (Figures 16 and 17). The channel 140 is shaped to separately advance and retract each of the latch assemblies 104. Thus, at each latch assembly the channel 140 has a shallow radially outwardly recessed concave pocket 141 which permits the head 108 of the plunger 107 to shift radially outwardly (Figure 17). There is a separate pocket for each latch assembly 104 and, thus, the pockets 141 are so spaced that they simultaneously align with all of the latch assemblies when the locking ring 130 is rotated. The heads of the plungers will automatically shift outwardly into the pockets because of the bias of the springs 110. The pockets are formed with smoothly curved walls in both directions of rotation of the locking ring forming camming surfaces so that the movement of the heads of the plungers in and out of the pockets is gradual rather than abrupt, thus, reducing as much as possible the amount of force necessary to shift the plungers, particularly when they are being urged inwardly. However, the slope of the end wall 147a of the pocket 141 is substantially steeper or more abrupt than the other end wall 147b. This enables the bottom of the pocket 141 to act somewhat in the nature of a detent to seat the plunger head 108 at the fully retracted position (Figure 17).

For the purpose of permitting the inward radial shift of the plungers, adjacent each of the pockets 141 the lip 138 has a shallow recess 142. Each recess 142 combined with the inwardly curving wall 147b forming one end of the adjacent pocket 141 gives the centreline of the channel 140 a somewhat sinuous path which positively forces the plungers inward. Since this movement results from the inner face of the primary cam member 131 bearing against the head 108 of the plunger, this inward movement of the plunger is positive and when completed the plunger is positively locked against any inadvartent outward radial movement, as is clearly evident in Figure 16. When the locking ring 130 reaches this position, a catch 143 enters a slot 144 in the locking ring under the urging of a spring 145 (Figures 14, 15 and 18). As the locking ring is turned counterclockwise, as illustrated in Figures 16 and 17, the sloped end walls of the recess 142 positively pull the plungers outwardly as the locking ring is turned. This shifts the ring and latch assemblies toward release position. This camming action is enough to positively initiate retraction of the locking fingers from the plate, thus, preventing hang up of any of the locking fingers due to frictional engagement with the plate. Once this retraction has been initiated, the springs 110 take over and complete the retraction movement as the plunger head 108 drops into the pocket 141.

The cam track or channel 140 is provided with as many pocket combinations 141 and 142 as the body member has latch assemblies 104. In the illustrated construction with six latch assemblies the pocket combinations are at 60° spacings. In like manner, the ring is provided with six slots 144 spaced at 60° intervals. Thus, by intermittently continuing to rotate the ring 130 counterclockwise, each combination of pockets 141 and 142 will move from one latch assembly to another. At each position of the ring where the plunger heads 108 are in the position illustrated in Figure 16, one of the slots 144 will align with the catch 143, permitting it to automatically stop further rotation of the ring.

The arrangement of the cam track or channel 140 illustrated in Figures 16 and 17 is designed for rotation of the ring 130 in one direction only because of the slope of wall 142a. If, however, it is desired to limit ring movement to reciprocal movement, the arrangement illustrated in Figure 21 can be used. In this arrangement the walls 148 of the pocket 141a are identical, both having a gradual slope. The centre of the pocket is formed by a shallow depression or detent 149 to seat the plunger head 108. With this arrangement applied to the support chuck construction illustrated in Figure 12, the arc of movement of the ring can be limited to 30°.

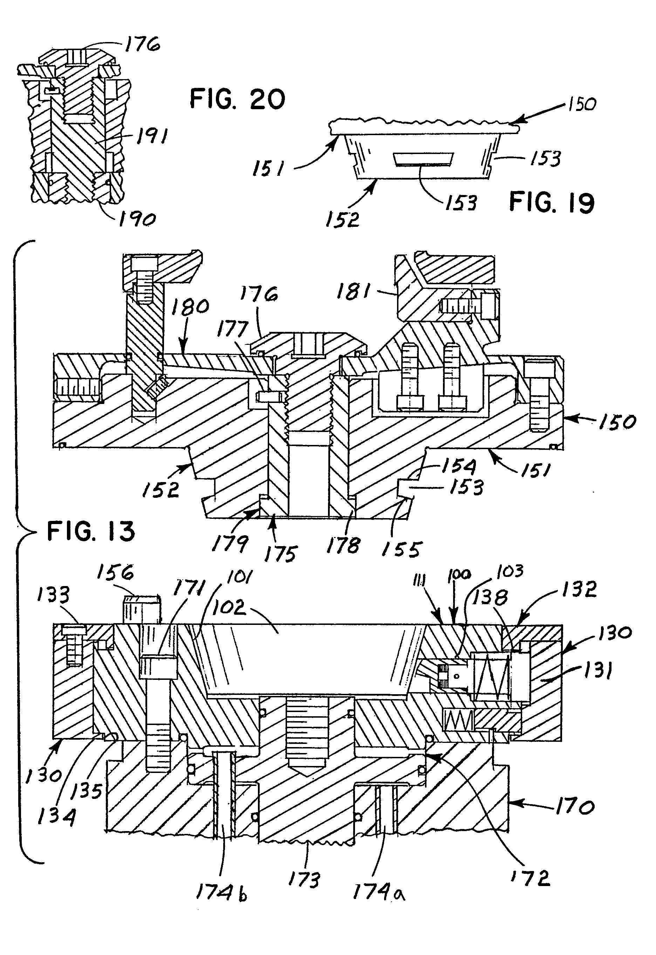

The support chuck or element 100 which has been described is designed to mount a plate member 150 on which various types of workpiece gripping means can be mounted. For example the plate can be used to mount a diaphragm chuck 180 as illustrated in Figure 13 or it can be used to mount a collet or other type of workpiece holding means. The particular type of workpiece holding device mounted on the plate is not part of this invention. The construction and operation of the workpiece holding device or chuck mounted on the plate is conventional and well-known to those skilled in the design and use of chuks, collets and fixtures for supporting a part for machining.

The plate 150 has a flat back face 151 normal to the axis of the plate and adapted to seat against the front face 111 of the support chuck 100. It also has a central frusto-conical central boss 152 of a size and shape to seat snugly within the recess 102. The tapered walls of the boss 152 are designed to seat against the walls of the recess 102 and centre the plate 150 with respect to the central axis of the support chuck 100. Cut into the walls of the boss are a plurality of sockets or part-circumferential slots 153, one aligned with each of the latch assemblies 104 (Figure 19). These are made by machining cuts in the wall, the central axes of which are parallel to a line tangent with the face of the wall. Each of these slots has an axially forward face 154, normal to the central axis of the plate and an axially rearward face 155 which is inclined outwardly and rearwardly. The inclination of the rearward face is complementary to that on the latch finger 105 which will enter the slot. The slots are all located in a plane normal to the central axis of the plate and parallel to its rear face 151 (Figure 19). Instead of the individual slots 153, an annular groove or channel of the same cross section could be cut into the face of the boss.

When a particular part is to be machined, the plate 150 having the proper size and type of work holder mounted on its face is selected. The type of work holder is governed by the type of part and the particular machining to be done on it. To mount the

0201298

plate on the support chuck 100, the locking ring 130 is rotated to a release position permitting all of the latch assemblies 104 to retract. The plate is then mounted on the support chuck using the locator pin 156 on the support chuck (Figure 13) which is designed to seat in a suitable opening 157 (Figure 12) in the plate to properly index the plate circumferentially. Then, by means of a suitable tool engaging an opening 158 (Figure 15), of which there may be as many as there are of the latch assemblies, the locking ring 130 is rotated to extend the latch assemblies 104, forcibly pressing the latch fingers 105 into the slots 153. The engagement of the complementary camming surfaces 123 and 155 causes the plate 150 to be pulled tightly against the front face 111 of the support chuck 100. At the same time, the interfit of the inclined walls of the boss 152 with the complementarily inclined walls of the recess 102 automatically centre the plate with respect to the support chuck.

Due to the fact there may be slight differences in the axial position of the slots 153 from one plate to another, or slight differences in the engagment of the camming surfaces 123 and 155 due to wear or because it is impossible to eliminate all possible tolerance accumulation, slight differences in the distance to which the individual latch fingers can be extended will occur. Thus, it is necessary to provide a very small amount of lost motion in the latch assemblies which permits each separate latch assembly to adjust to its own individual situation. This is accomplished by

23 **0201298**

providing the column of Bellville or conical washers 122 in each latch assembly. Since the amount of adjustment is small, these washers are capable of making the necessary compensation. In addition, they have the important advantage of providing uniform rather than graduated resistance as they are compressed, thus, maintaining uniform clamping pressure entirely around the plate. Bellville washers are also important because they can be so designed that they have very high compression resistance, even though they are comparatively small and compact. This is important because these washers must be able to resist the very high centrifugal forces created by the latch fingers at the higher operating speeds of the chuck as, for example, speeds in the range of 5000 r.p.m. or more. Conventional coil springs are incapable of developing this resistance in sizes which can be mounted within the sockets in the latch fingers. In this situation increasing the size of the fingers to obtain more space for the spring is self defeating because this merely adds to the centrifugal forces which will be generated.

The support chuck 100 can be mounted on any appropriate support element, stationary or driven. In Figure 13 it is illustrated as mounted on a machine tool spindle 170 by means of cap screws 171. The spindle is only fragmentarily illustrated because it is of conventional construction. Further, it can be of a number of different constructions, all of which are well-known to those skilled in the machine tool art. In the case of the spindle 170, the face has a recess 172 forming a chamber within which is seated a piston 173. The piston can be caused to shift forwardly by introduction of pressurized fluid through the conduit 174a. When so shifted, the forward end of the piston engages a spool 175 in the plate 150, pushing it forward. The forward end of the spool engages the centre of the diaphragm of the diaphragm chuck 180. This causes the article gripping arms 181 of the chuck to separate, releasing the workpiece. When the fluid pressure behind the piston 173 is released, the resilience of the diaphragm both returns the arms to clamping position and pushes the spool 175 and the piston 173 back to retracted position. The piston can be forcibly retracted by admission of pressurized fluid in front of the piston through a conduit 174b.

A cap 176 is threaded into the forward end of the spool 175 and positively traps the diaphragm between it and the spool. A pin 177 is mounted in the forward end of the spool to prevent spool rotation when the cap is mounted and removed. The rear end of the spool 175 has a flange 178 seated in a rebate 179 to limit forward movement of the spool. The piston and spool provide an actuator mechanism for the workpiece chuck so it can be manipulated to grip or release the workpieces.

The above described construction for the workpiece mounting chuck 180 and the actuator mechanism for it is particularly advantageous because it makes the support chuck and the plate each self contained, that is, they can be assembled to and disassembled from each other without any connections having to be made in the actuator system for the workpiece chuck.

Howver, various other types of chuck actuator mechanisms operating through the spindle can be substituted for that which has been described. For example, a draw bar 190 (Figure 20) extending through the spindle, the support chuck and into the centre of the plate could be substituted for the fluid operated mechanism above described. For example, a fitting 191 could be substituted for the spool and threadedly mounted on the forward end of the draw bar and itself be internally threaded to receive the cap 176. In this case, the end of the bar could substitute for the flange 178 to limit forward motion. Again, the mounting and dismounting of the plate is quite simple because the only requirement added to that of the arrangement illustrated in Figure 13 is attachment or removal of the threaded cap. This arrangement could be used with a collet in which the central bar for operating the collet is attached to the fitting 191 and substituted for the cap 176. It will also be recognised that the actuator mechanism can be used with workpiece gripping chucks of both the O.D. and I.D. gripping types.

This construction of the plate 150 and the means by which it is located with respect to and latched to the support chuck 100 permits both the plate and the support chuck to be simplified and reduced in size. Both units can be substantially reduced in thickness, thus locating the part or workpiece closer to the spindle of the machine tool or other type of machine tool support, driven or stationary. This is important because it reduces the moment arm by which lateral thrust forces imposed on the workpiece by the tools are multiplied. These forces not only accelerate wear on the spindle and spindle bearings, they also increase the effect of any tolerances which exist in the spindle support. The invention both simplifies the support chuck and reduces the mass and weight of the plate. This is not only beneficial during actual machining operations, it facilitates both handling and storage. The mounting and removal of the plates is simplified, significantly contributing the adaptability of this invention to automation and compatibility with robots.

This invention permits a machine equipped with a standard chuck to be refitted to adapt it to machine a part of a different size by detaching the adapter plate and its work holder and replacing it with another plate having a work holder of the proper size and type for the part. This is a very simple and rapidly accomplished changeover. It also makes it feasible to perform all of the steps necessary to complete a particular machining operation on a particular part. For example, a particular opening may require boring, reaming and finally honing. Each successive operation requires a progressively higher degree of accuracy. For this purpose the required chuck shouold be changed, such as using first a sliding jaw chuck then a collet and finally a diaphragm chuck. Heretofore, because of the labour and downtime required to change chucks it has been necessary to mount these chucks on three different machines, an inefficient utilization of equipment unless long, high volume production runs were involved. Utilizing this invention, a single machine can be used with only a few minutes required to complete all necessary changes. Further, all of these changes can be made entirely automatically by means of robots, a capability not previously attained for this phase of tooling.

Another advantage of the invention is that each adapter plate can be prebalanced to accommodate irregularly shaped parts which would result in an eccentric weight distribution. This can be done in such a manner that when the use of the adapter plate for the particular part is complete or suspended for a while, the counterbalances can be removed or replaced with different ones as needed.

There is no time consuming mounting and remounting of chucks as heretofore has been required. There is no necessity for gauging and checking the substituted adapter plate chuck for accuracy because the engagement between the adapter plate and the suport member or chuck automatically locates the adapter plate with respect to the support chuck and the position of the workpiece gripped in the chuck on the adapter plate is automatically coordinated with the support chuck.

The adapter plate and its jig or mount for the part can be stored for future use. Thus, the use of precision machining techniques for parts is made feasible for parts which have small production runs or may be used in small quantities over a long period of time such as years.  The investment in the adapter
plate and its chuck is small enough to permit this.
Further, the downtime for converting the machine is
reduced to minutes rather than hours.  There is also a
major reduction in labour costs.

The invention also permits the machines to be
equipped with support members or chucks of a single
size, or in a large shop, of at least only a few
sizes.  This in itself is a major economy.  It also
makes the machines interchangeable whereby machines can
be quickly adapted to machining parts then in demand
rather than being left idle because they are not suited
for mounting chucks of a type required to machine the
particular parts needed.

These benefits are obtained while at the same
time providing a system capable of significantly
improved tolerance control.  This invention permits
repeatable workpiece positioning within $\pm$ 3.8 $\mu$m
(0.00015 of an inch), repeatable concentricity within
5.1 to 8.9 $\mu$m (0.002 to 0.00035 of an inch) and
repeatable axial positioning with $\pm$ 1.25 $\mu$m (0.00005 of
an inch). This is possible because the invention makes
it possible to take advantage of the high degree of
accuracy characteristic of heavy duty, precision chucks.

The construction of the support for the plate is
not limited to chucks of the types described and
illustrated.  Support means including chucks of other
constructions can be utilized, provided they are
capable of sustaining the types of loading incident to
use of this invention and are capable of positively
aligning the adapter plate with the support's
centerline.

While preferred embodiments of this invention and
modifications thereof have been illustrated and
described, other modifications can be made without
departing from the principles of this invention.

CLAIMS

1.   Means for mounting an article holding
assembly on a support element in preparation for
machining, said means comprising:  a support member
(10; 100) adapted to be mounted on said support
element, said suppport member having parallel front and
back faces normal to its central axis; a plate member
(60; 150) having a back face normal to its central
axis, the front face of said plate member being adapted
to mount the article holding assembly; one of said
support and plate members having a frusto-conical boss
(55; 152) concentric with its central axis and the
other of said support and plate members having a recess
(88; 102) concentric with its central axis and of a
size and shape to snugly receive said boss therein for
automatically rendering said plate and support members
concentric with each other when the rear face of said
plate member is seated against the front face of said
support member; a plurality of latch elements (38; 104)
mounted on said support member for inward and outward
radial movement; the plate member having latch element
engaging means (63; 153) aligned with the latch
elements; and a locking ring (44; 130) mounted on and
surrounding the support member (10; 100) and
operatively connected to the latch elements (38; 104)
for shifting the latch elements radially in response to
movement of the locking ring relative to the support
member for connecting and disconnecting the plate
member to and from the support member.

0201298

2.    Article mounting means according to Claim 1 in which the locking ring (44) is movable axially for shifting the latch elements (38).

3.    Mounting means according to Claim 2 in which the locking ring (44) is internally threaded (45) and threadedly engages the support member.

4.    Mounting means according to Claim 2 or Claim 3 in which the locking ring has a cam surface (46) engaging the latch elements.

5.    Mounting means according to Claim 4 in which the plate member (60) has a rearwardly extending means (61) arranged in an annular shape the inner face (62) of which forms said concentric recess and the outer face has recessed therein said latch element engaging means (63), said latch elements being fingers (38) mounted by pivots (38) to the support member, each of the latch elements having a radial outer surface (40) engaged by the cam surface (46) of said locking ring for pivotal radial inward movement to engage the latch element engaging means in the outer face of said rearwardly extending outer means.

6.    Mounting means according to Claim 5 in which the rear wall of the latch engaging means is rearwardly and radially outwardly inclined to form a cam surface (65) and the forward ends of the fingers each have a complementary cam surface (42) whereby the fingers as they pivot radially inwardly pull the plate member tightly against the front face of said support member.

0201298

7.     Mounting means according to any of Claims 1
to 4 in which the latch element engaging means is a
rearwardly projecting annulus (61) integral with the
rear face (69) of the plate member (60) and the latch
element engaging means is a radially outwardly facing
channel (63) in the circumferential outer face of said
annulus.

8.     Mounting means according to Claim 1 in which
the boss (152) is integral with and projects rearwardly
from the back face of the plate member (150) and the
recess (102) is in the front face of the support member
(100); the latch elements (104) being equally spaced
and mounted in the support member for reciprocal
sliding radial movement; the latch element engaging
means (153) being recessed into the radial outer face
of the boss, the outer radial ends of said latch
elements engaging a cam surface (136) on the locking
ring (131) for radial inward and outward movement
between engagement with and release of said plate
member when said locking ring is moved
circumferentially.

9.     Mounting means as claimed in Claim 8 in
which the locking ring (131) has a cam track which has
adjacent portions (141) at each of said latch elements
which are at different radial spacings, means (108) on
each of said latch elements (104) engaging said cam
track for transmitting the variation in cam track
radial spacing to said latch elements as said locking
ring is moved circumferentially for latching and
unlatching said plate member from said support member.

0201298

10.   Mounting means according to Claim 9 in which the cam track is a channel (140) and said means on said latch elements is a head (108) seated in said channel.

11.   Mounting means as claimed in any of Claims 8 to 10 in which each of the latch elements (104) has a radially inner latch finger (105) and a radially outer plunger (107) engaging the locking ring (131); a lost motion connection (120, 121) between said finger and plunger and a plurality of Bellville washers (122) urging the finger and plunger apart and stop means for limiting said separation movement, said lost motion connection and Bellville washers providing limited latch element length adjustment while maintaining constant radial thrust as said latch elements are urged radially inwardly by said locking ring.

12.   Mounting means according to Claim 11 which includes a spring (110) surrounding each of the latch elements (104) and urging it radiially outwardly to retracted position.

13.   Mounting means according to any of Claims 8 to 12 in which the radial inner ends of the latch elements and the latch element engaging means have complementary rearwardly and radially outwardly inclined cam faces (123, 155) for urging the plate (150) and support member (100) together axially.

14. Mounting means according to any of Claims 1 to 13 which includes a lock member (49, 143) mounted on the support member (10, 100) and the locking ring (44, 130) has a lock member engaging means (144); a spring urging the lock member into said lock member engaging means whenever said latch elements are fully engaged with said latch element receiving means of the plate member.

15. Mounting means according to any of Claims 1 to 14 which includes power actuable means (18; 214; 173) extending through the centre of and movable with respect to both the support and the plate member for actuating the article holding assembly.

FIG. 1

FIG. 2

0201298

1/10

FIG. 4

FIG.3

FIG. 7

FIG. 5

FIG. 6

FIG. 9

FIG. 8

217

210

60 d

FIG. 10

211

212

69

63

61

88

216

213

10 a

115

FIG. 11

214

0201298

FIG. 12

FIG. 18

0201298

FIG. 20

FIG. 19

FIG. 13

FIG. 14

FIG. 15

FIG. 16

FIG. 17

FIG. 21